# EUROPEAN PATENT SPECIFICATION

(11) **EP 3 640 568 B1**
(45) Date of publication and mention of the grant of the patent: **14.09.2022**
(21) Application number: 18200619.7
(22) Date of filing: 16.10.2018
(51) Int. Cl.: F25C 5/187, F25D 21/02, G01J 1/00

(54) **FREEZING SENSOR**
GEFRIERSENSOR
DÉTECTEUR DE CONGÉLATION

(43) Date of publication of application: 22.04.2020
(73) Proprietor: Vestel Elektronik Sanayi ve Ticaret A.S., 45030 Manisa (TR)
(72) Inventor: DÖNER, Çagdas, 45030 Manisa (TR)
(74) Representative: Kehl, Ascherl, Liebhoff & Ettmayr Patentanwälte Partnerschaft mbB

(56) References cited:
- EP-A1- 3 321 768
- US-A- 5 606 864
- US-A1- 2002 117 001
- US-A1- 2012 247 130
- US-A1- 2017 059 386
- US-B1- 6 324 855
- US-B1- 6 337 959

## Description

### FIELD OF THE INVENTION

The invention relates to a measuring device 100 for determining the transition between a liquid and a solid phase of a medium 103 and a method for determining the transition between a liquid and a solid phase of a medium 103.

### BACKGROUND

Various goods are stored in refrigerating or freezing apparatuses. The temperature and the cooling/freezing conditions in those apparatuses may vary due to a number of influences, like power failure, imprecise operating refrigerating devices, imprecise operating temperature sensors, or improper handling of the refrigerating or freezing apparatuses. However, it is important to determine whether those goods have remained in a cooled but unfrozen or in a frozen unthawed state over a period of time.

Various freeze or thaw indicating devices have been provided in the prior art.

WO 2007/068061 A1 describes a freeze indicating device. The device includes a vessel having an open end, the vessel containing an amount of a liquid that expands at or near the freezing temperature and sealing means for sealing the open end of the vessel, wherein the sealing means interacts with the liquid upon freezing of the liquid and undergoes displacement with respect to the vessel to indicate that the liquid has frozen. This displacement of the sealing means is irreversible without user interaction.

US 2007/039383 A1 describes a sensor comprising a hollow, cylindrical tube with an open end, featuring a releasable cap and a closed end, with a slidable piston inside the tube. A compartment, inside the tube, placed between the piston and the end, is filled with a compressed fluid. Upon thawing of the product, the fluid also thaws, leaves the compartment and allows the movement of the piston, pushed by the fluid.; Said movement of the piston is irreversible and constitutes the sensor's visual indication revealing that the product has been thaw.

US 2015/247663 A1, also published as CN105579798, describes an apparatus for defrosting and evaporator in refrigeration system, which is operated by the following steps comprising: generating and projecting infrared from infrared emitting diode to the evaporator under standard voltage; projecting detection-infrared and receiving reflection-infrared at infrared emitting diode for measuring the voltage applied to infrared emitting diode; evaluating the thickness of frost on the evaporator at control processor from the declined voltage applied to infrared emitting diode which results from infrared interference and photoelectric effect; and operating the defrost system, when the thickness of frost is higher than threshold value. Accordingly, a phase transition between a liquid and solid medium 103 is not determined. US 5 606 864 and US 2012/0247130 A1 relate to devices for detecting ice in a container. US 2017/0059386 A1 and US 6 337 959 B1 relate to a device for determining a liquid level in a container.

### OBJECT OF THE DISCLOSURE

Therefore, it is an object of the present disclosure to provide an improved apparatus which is capable of determine whether a medium 103 has undergone a transition from the solid to the liquid phase or vice versa.

### SUMMARY

The object has been solved with the subject matter defined in the appended claims.

A first aspect of the disclosure relates to a measuring device 100 for determining the transition between a liquid and a solid phase of a medium 103 according to claim 1.

Disclosed is also a measuring device 100, wherein the container 109 comprises a first end and an opposing second end, the measuring devices 100 comprises the medium 103 within the space and the medium 103 is disposed at the second end, and the first proximity sensor 101 is disposed at the first end and configured to determine the distance between proximity sensor 101 and the medium 103.

Disclosed is also a measuring device 100, further comprising a second proximity sensor 101 disposed at the second end of the container 109.

Disclosed is also a measuring device 100, wherein the container 109 comprises a first portion comprising the first proximity sensor 101 and a second portion sealable to the first portion.

Disclosed is also a measuring device 100, further comprising a tank which is adapted to fit into the second portion and comprising the medium 103.

Disclosed is also a measuring device 100, wherein the medium 103 is water.

Disclosed is also a measuring device 100, further comprising a processing module operatively coupled to the proximity sensor 101 and configured to trigger measurements by the proximity sensor 101 at at least two predetermined points in time t1 and t2.

Disclosed is also a measuring device 100, wherein the processing module is further configured to determine that the distance between the proximity sensor 101 and the medium 103 has changed beyond a threshold between the measurements at t1 and t2.

Disclosed is also a measuring device 100, wherein the processing module is further configured to provide a signal indicating that the distance between the first end of the container 109 and the material disposed at the second end of the container 109 has changed beyond a threshold between the measurement at t1 and t2.

Disclosed is also a measuring device 100, further comprising a switch operatively coupled to the processing module and being operable by user, wherein the position of the switch indicates to the processing module whether the signal is triggered when the distance has been reduced or increased.

Disclosed is also a measuring device 100, further comprising a communication module configured to communicate by cable or wirelessly with a network.

Disclosed is also a measuring device 100, wherein the processing module is configured to send the measurement data via the communication module and via the network to a remote device.

A second aspect of the disclosure relates to a refrigerating device comprising the measuring device as defined above.

A third aspect of the disclosure relates to a method according to claim 11.

Disclosed is also a method, further comprising
c) Disposing the medium 103 within the space of the container 109; and
d) Determining the distance between the proximity sensor 101 and the medium 103 at at least two different points in time t1 and t2.
e) Determining that the distance determined at at least t1 and 2 has changed beyond a threshold.

### BRIEF DESCRIPTION OF THE FIGURES

Figure 1A illustrates a measuring device 100 for determining the transition between a liquid and a solid phase of a medium 103.
Figure 1B illustrates the measuring device 100 of figure 1 for determining the transition between a liquid and a solid phase of a medium 103 in a state where the volume of the medium 103 has expanded due to a change of temperature of the medium 103.
Figure 2 illustrates a method for determining the transition between a liquid and a solid phase of a medium 103.

### DETAILED DESCRIPTION

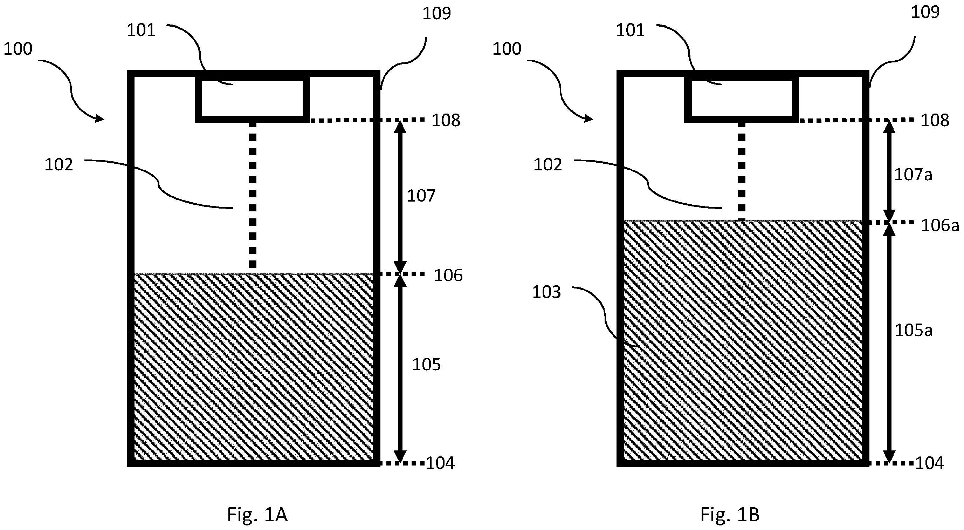

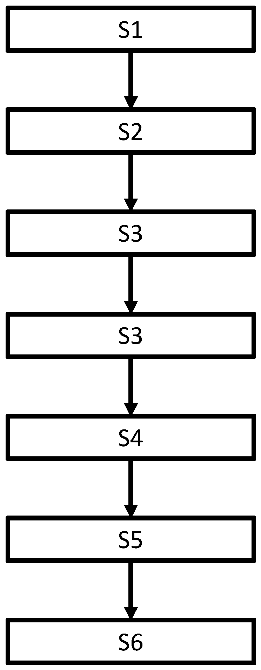

A measuring device 100 for determining the transition between a liquid and a solid phase of a medium 103 is disclosed. Figure 1a describes an example of the measuring device 100. The measuring device 100 comprises a container 109, a medium 103 which is to be or has been disposed in the container 109 and a proximity sensor 101.

The proximity sensor 101 is configured to measure the distance 107 between the proximity sensor 101 and the medium 103 within the container 109 via any suitable distance determining means 102. The proximity sensor 101 is located at least at one end of the container 109. During performing a measurement with the proximity sensor 101 the container 109 is positioned in a way that the proximity sensor 101 is positioned at the top of the container 109 and the medium 103 is within the container 109 at the bottom of the container 109 and the eye of sight between the surface 108 of the proximity sensor 101 and the surface 106 of the medium 103 is free. Thus, the proximity sensor 101 can determine the distance 107 between the proximity sensor 101 and the medium 103. The result of this measurement can be stored in a local or remote memory.

The measuring device 100 is capable of performing a second proximity measurement at at least one different time point. In the example illustrated in figure 1B the medium 103 has undergone a volume expansion since the liquid medium 103 has been exposed to temperatures which resulted in a freezing of the medium 103 and thus a transition of the medium 103 from the liquid to the solid phase occurred and the surface 106a of the medium has moved up. This effect will only be seen for media 103 which can undergo negative thermal expansion. For example, it is known that water when transitioning from the liquid to the solid state will undergo a drastic density increase and thus a volume expansion and vice versa will when transition from the solid to the liquid phase will undergo a drastic density decrease and thus a volume contraction. The reverse effect, i.e. the contraction of the medium 103 volume in response to the exposure to temperatures which resulted in a freezing of the medium 103 (positive thermal expansion) can also be measured with the measuring device 100. Thus, the measuring device 100 can determine the transition of a medium 103 between a liquid and a solid phase (and/or vice versa) independent of whether the medium 103 exhibits negative or positive thermal expansion.

Due to the volume expansion or contraction of the medium 103 the distance 107a between the surface 1089 of proximity sensor 101 and the surface 106a of medium 103 changes because the surface 106a of the medium 103 has moved up. The measuring device 100 is capable of detecting that the distance 107a from the sensor to the medium 103 has changed, e.g. decreased and thus the volume and the distance 105a between the surface of the medium 103 and the bottom of the container 109 will be increased. Since the amount of medium 103 in the container 109 is fixed the relation between the volume and density of the medium 103 in the container 109 is volume = mass/density.

Based on the detected distance the measuring device 100 can indicate that this change has occurred. This indication can be the forwarding of data to a further local or remote device or the provision of a visual or acoustic alarm indicated and/or reporting the measured change of distance and thus volume.

Thus, the disclosed measuring device 100 provides at least the following advantages over the prior art measuring devices 100.

The device determines the volume expansion/contraction of a medium 103 as an indicator of the transition of a medium 103 between the liquid and solid phase or/and vice versa. Thus, the disclosed measuring device 100 measures a more accurate indicator of a phase of a medium 103 than those measuring devices 100 that measure the temperature directly. The phase transition does not only depend from the temperature, but, for example, also from the air pressure, the amount of solvents in a medium 103, etc. Thus, a pure temperature sensor is not sufficiently accurate enough for determining whether a medium 103 undergoes phase transition.

Moreover, the disclosed measuring device 100 has the advantage that it can be reused to detect an infinite number of phase transitions because the measuring device 100 is not rendered dysfunctional after one phase transition, like in those devices where a seal or piston is displaced or broken.

The container 109 can have any suitable shape, for example, the shape of a rectangular box, cube or cylinder. The container 109 has walls enclosing a space that is filled with air and a medium 103. Preferentially the container 109 has a longitudinal extension with the extension of the container 109 on one axis being larger than the extension of the container 109 on the other two axes, for example length of longitudinal axis : length of one or both axes orthogonal to longitudinal axis = 1.5 - 2.0 : 1.

One wall of the container 109 represents a first end of the container 109 and the opposing wall represents the second end. Preferentially, the first end and the second end are those walls which the axis that defines the longitudinal extension cuts. The walls of the container 109 can be made of any suitable material that prevents the medium 103 from leaving the container 109 and/or is thermo-conducting. For example, the material for the walls of the container 109 can be stainless metal or steel, aluminum, an alloy or glass. The walls may also contain water-impermeable, but air-permeable membranes, for example, in the form of windows, to allow a gas exchange with the environment which further improves the adaptation of the medium 103 to the temperature of the environment, reduces latency in the measurement, and reduces any pressure induced artefacts on the measurement which may be caused by an airtight container 109 containing medium 103 and air undergoing contraction or expansion.

The walls can have a thickness of between 0.1 mm and 5 mm, 0.5 and 4 mm, and 1 and 3 mm. The longitudinal axis of the container 109 can have a length of 1-20 cm, 2-10 cm, 3-8 cm. The container 109 can consist of one portion, two portions, or more portions. Two or more portions can be reversibly or irreversibly fixed to each other. For example, the container 109 can consist of a body as a first portion and a lid as a second portion that is reversibly affixed to the body by any suitable attachment means, e.g. a winding, adhesive, snapping means etc. The body may be intended to be replaceable during use. A body without the remainder of measuring device 100 may be provided with a measured amount of medium 103 and a removable seal over an opening of the body preventing the medium 103 from spilling out during transport. Alternatively, a replacement medium 103 may also be provided in a second container 109 (e.g. snap) fitting into the body of the first container 109 and containing a removable seal over an opening of the second container 109 preventing the medium 103 from spilling out during transport.

The container 109 may also contain alternatively or in addition a sealable opening through which the medium 103 can be filled into the container 109, especially, when the first container 109 consists of one portion only. The container 109 may also contain a visually transparent window extending longitudinally at one of the walls of the container 109 or the container 109 many contain at least one visually transparent wall. The transparent window or wall may, comprise gauge marks, allowing the user to determine the amount of medium 103 within the container 109.

The container 109 may also contain on the outside attachment means, for example, adhesive strip or bores allowing the container 109 to be attached to a further device, e.g. the inside of a cooling or freezing apparatus.

The medium 103 can be any medium 103 which can undergo a transition between a liquid and a solid phase at a desired pressure. The medium 103 consists of a material that is different from the wall material of the container 109 and the medium 103 material has a melting point that is substantially lower than the melting point of the wall container 109 material. The medium 103 can undergo a transition between a liquid and a solid phase at a desired pressure, for example, atmospheric pressure and/or within a desired temperature range, e.g. between -20 and 20, -10 and 10, -5 and 5, -2 and 2 degrees Celsius at atmospheric pressure. The preferred medium 103 is water, e.g. tap water or distilled, i.e. pure water. The medium 103 can also be solution comprising or suspension. The medium 103 can comprise water and optionally at least one of an alcohol, a carbohydrate, a lipid, or a protein, or any combination thereof. In this way, the medium 103 may be chosen to simulate the composition of the goods. The medium 103 can occupy between 10 and 75, 20 and 60, 30 and 50 vol-% of the space within the container 109 allowing the medium 103 to contract and/or expand within the container 109 without breaking the container 109.

A proximity sensor 101 is a sensor configured to detect the presence of nearby objects, i.e. a medium 103, without any physical contact. The proximity sensor 101s suitable for the disclosed measuring device 100 are not particularly limited and are suitable and configured to detect the distance between the sensor and a medium 103 and/or the sensor and the wall opposing the sensor. The proximity sensor 101s may be configured to measure a distance of 1-50 cm, 2-40 cm, or 3-20 cm. The proximity sensor 101s may be configured to measure a change of distance of at least 0.5, 1, 2, 3, 4, 5, 10, 50, 100, 200, or 500 mm. The proximity sensor 101 can be an ultrasonic proximity sensor 101, capacitive proximity sensor 101, capacitive displacement proximity sensor 101, LIDAR proximity sensor 101, RADAR proximity sensor 101, or a photoelectric proximity sensor 101.

The disclosed proximity sensor 101 can be encapsulated in a water-proof containment. The proximity sensor 101 may be positioned at the first end of the sealable container 109 within the sealable container 109 and, optionally, a further proximity sensor 101 may be positioned at the second end of the container 109 within the container 109. Use of second proximity sensor 101 has the advantage that the measuring device 100 can be installed top-down or bottom up at a desired location without the need to check the proper position of the measuring device 100. Circuitry, e.g. the processing module described below, connected to the proximity sensor 101 may determine whether the measuring device 100 is installed top-down or bottom up and instruct the measuring device 100 to perform only measurements with the proximity sensor 101 that currently is at the top of the container 109. The disclosed proximity sensor 101 outputs initially an analog signal which can be further processed at the measuring device 100 or a remote location. The disclosed proximity sensor 101 can be configured to covert an analog signal (e.g. voltage values) obtained by the measurements into a digital signal. The disclosed proximity sensor 101 can be operatively linked via cables to a remote module or a local module within or at the measuring device 100 and configured to provide the analog or digital signal to the remote module or the local module.

The measuring device 100 may also comprise a processing module as local module. configured to control the proximity sensor 101, i.e. to instruct the proximity sensor 101 to perform measurements and to receive the data determined by the proximity sensor 101. The processing module comprises a processor and a memory. The processing module may be operatively linked via cables with the proximity sensor 101 and may be within the container 109 or positioned on the outside of the container 109. The processing module may forward the digital data to a remote device wirelessly or by cable (e.g. by established bus systems like 1- Wire or 1²C). Any system, e.g. a remote computer or remote mobile device, with connection to the measuring device 100 may further process the received analog or digital data.

The processing module can be further configured to trigger measurements by the proximity sensor 101 at at least two predetermined points in time t1 and t2, or any predefined and/or user-configured time interval. The processing module is capable of detecting that the distance 107a from the sensor to the medium 103 has changed, e.g. decreased and thus the volume and the distance 105a between the surface of the medium 103 and the bottom of the container 109 will be increased.

Based on the detected distance the measuring device 100 comprising the processing module can indicate that this change has occurred. This indication can be the forwarding of data to a further local or remote device or the provision of a visual or acoustic alarm indicated and/or reporting the measured change of distance and thus volume change. Based on the change of the measured distance the measuring device 100 can indicate that this change has occurred. This indication can be the forwarding of data to a further local or remote device or the provision of a visual or acoustic alarm indicated and/or reporting the measured change of distance and thus volume. Detected changes may be changes, which were above a predefined threshold, e.g. a change of least 0.5, 1, 2, 3, 4, 5, 10, 50, 100, 200, or 500 mm. It also possible that percental change of the distance 107, 107a us used as triggering the indication, e.g..5, 1, 2, 3, 4, 5, 10, 20, or 30%.

The measuring device 100 may also contain a network module for wireless communication which may be integrated with the processing module or separate from the processing module by a cable to a location outside of the room where the measuring device 100 can be installed. The module for wireless communication contains locally at least one antenna or is remotely connected by cable to at least one antenna and may communicate the digital measurement data by using any suitable telecommunication technology, like Bluetooth (IEEE 802.15.1), WiFi (IEEE 802.11), or mobile phone technology, in particular, Machine Type Communication (MTC). In this way, the processed measurement data may be provided to an access point within the room where the measuring device 100 is installed (when the antenna or/and communication module is installed on or at the measuring device 100) or to an access point that is installed outside the room where the measuring device 100 is installed (when the antenna or/and communication module is installed remote to the measuring device 100).

The processing module or a remote computer/mobile device may further be configured to provide a signal to a user. The signal may be an acoustic, visual, or vibration signal. Therefore, a signal module (not shown in the figures) may be connected to the processing module configured to provide an acoustic (e.g. by a speaker on the outside of the measuring device 100), a visual (e.g. by a signal lamp, e.g. an LED, on the outside of the measuring device 100), or a vibration signal (e.g. a vibrational motor on or within the measuring device 100). The signaling module may be positioned at the measuring device 100, e.g. directly attached to the outside of the measuring device 100, or remote to the measuring device 100.

The measuring device 100 may further comprise a switch operatively coupled to the processing module and being operable by user, wherein the position of the switch indicates to the processing module whether the transition of the medium 103 from the liquid phase to the solid phase or vice versa should trigger a signal indicating a transition between the liquid phase and the solid phase, respectively, the reverse.

Further disclosed is a refrigerating device comprising the above-described measuring device 100, for example, a fridge, freezer, or cold storage room. The refrigerating device comprises a closable room or space and a cooling apparatus configured to reduce the temperature within the room or space of the refrigerating device. The measuring device 100 can be installed within the room or space of the refrigerating device.

The measuring device 100 as defined above may also be used to determine the phase of a medium 103.

In addition, a method is disclosed using the above defined measuring device 100. The method comprises providing a container 109 comprising walls enclosing a space (S1). The container 109 can be any container 109 as defined above. The method further comprises disposing a proximity sensor 101 in the container 109(S2). The method may further comprise disposing a medium 103 within the space of the container 109 (S3). The medium 103 can be any medium 103 as defined above.

In a further step the distance between the proximity sensor 101 and the material disposed in the container 109 at a first point in time t1 and at least one second point in time may be measured (S4).

In a further step, it may be determined that the distance between the first end of the container 109 and the material disposed at the second end of the container 109 has changed beyond a threshold between the measurement sat t1 and t2 (S5).

In further step, a signal may be provided indicating that the distance between the first end of the container 109 and the material disposed at the second end of the container 109 has changed beyond a threshold between the measurement at t1 and t2, thereby indicating a transition between a liquid and a solid phase of the medium 103 (S6).

In summary, a measuring device 100 is described for determining the transition between a liquid and a solid phase of a medium 103 comprising a container 109 comprising walls enclosing a space and the walls being impermeable to the medium 103; and a proximity sensor 101 disposed within the container 109.

## Claims

1. Measuring device (100) for determining the transition between a liquid and a solid phase of a medium (103) comprising:
a. a container (109) comprising walls enclosing a space and the walls being impermeable to the medium (103);
b. a first proximity sensor (101) disposed within the container (109), wherein
the container (109) comprises a first end and an opposing second end,
the measuring devices (100) comprises the medium (103) within the space and the medium (103) is disposed at the second end, and
the first proximity sensor (101) is disposed at the first end and configured to determine the distance between the surface of the proximity sensor (101) and the surface of the medium (103); and
c. a processing module operatively coupled to the proximity sensor (101) and configured to trigger measurements by the proximity sensor (101) at at least two predetermined points in time t1 and t2,
wherein the processing module is further configured to determine that the distance between the surface of the proximity sensor (101) and the surface of the medium (103) has changed beyond a threshold between the measurements at t1 and t2, and thus to determine that the transition between the liquid and the solid phase of the medium (103) occurred.

2. Measuring device (100) according to claim 1, further comprising a second proximity sensor (101) disposed at the second end of the container (109).

3. Measuring device (100) of any preceding claim, wherein the container (109) comprises a first portion comprising the first proximity sensor (101) and a second portion sealable to the first portion.

4. Measuring device (100) of claim 3, further comprising a tank which is adapted to fit into the second portion and comprising the medium (103).

5. The measuring device (100) of any preceding claim, wherein the medium (103) is water.

6. The measuring device (100) of any preceding claims , wherein the processing module is further configured to provide a signal indicating that the distance between the first end of the container (109) and the material disposed at the second end of the container (109) has changed beyond a threshold between the measurement at t1 and t2.

7. The measuring device (100) of any preceding claims, further comprising a switch operatively coupled to the processing module and being operable by user, wherein the position of the switch indicates to the processing module whether the signal is triggered when the distance has been reduced or increased.

8. The measuring device (100) of any preceding claims, further comprising a communication module configured to communicate by cable or wirelessly with a network.

9. The measuring device (100) of claim 8, wherein the processing module is configured to send the measurement data via the communication module and via the network to a remote device.

10. Refrigerating device comprising the measuring device (100) according to any of the preceding claims.

11. Method comprising
a. Providing the measuring device of any of claims 1-9; determining the distance between the surface of the proximity sensor (101) and the surface of the medium (103) at at least two different points in time t1 and t2.
b. determining that the distance determined at at least t1 and t2 has changed beyond a threshold and thus determining that the transition between the liquid and the solid phase of the medium (103) occurred.

## Patentansprüche

1. Messvorrichtung (100) zur Bestimmung des Übergangs zwischen einer flüssigen und einer festen Phase eines Mediums (103), die Folgendes aufweist
a. einen Behälter (109), der Wände aufweist, die einen Raum umschließen, wobei die Wände für das Medium (103) undurchlässig sind;
b. einen ersten Näherungssensor (101), der innerhalb des Behälters (109) angeordnet ist,
wobei
der Behälter (109) ein erstes Ende und ein gegenüberliegendes zweites Ende aufweist,
die Messvorrichtungen (100) das Medium (103) in dem Raum aufweist und das Medium (103) an dem zweiten Ende angeordnet ist, und
der erste Näherungssensor (101) am ersten Ende angeordnet ist und so konfiguriert ist, dass er den Abstand zwischen der Oberfläche des Näherungssensors (101) und der Oberfläche des Mediums (103) bestimmt; und
c. ein Verarbeitungsmodul, das operativ mit dem Näherungssensor (101) gekoppelt und so konfiguriert ist, dass es Messungen durch den Näherungssensor (101) zu mindestens zwei vorbestimmten Zeitpunkten t1 und t2 auslöst,
wobei das Verarbeitungsmodul ferner so konfiguriert ist, dass es feststellt, dass sich der Abstand zwischen der Oberfläche des Näherungssensors (101) und der Oberfläche des Mediums (103) zwischen den Messungen bei t1 und t2 über einen Schwellenwert hinaus geändert hat, und somit feststellt, dass der Übergang zwischen der flüssigen und der festen Phase des Mediums (103) stattgefunden hat.

2. Messvorrichtung (100) gemäß Anspruch 1, die ferner einen zweiten Näherungssensor (101) aufweist, der am zweiten Ende des Behälters (109) angeordnet ist.

3. Messvorrichtung (100) nach einem der vorhergehenden Ansprüche, wobei der Behälter (109) einen ersten Abschnitt aufweist, der den ersten Näherungssensor (101) aufweist, und einen zweiten Abschnitt, der mit dem ersten Abschnitt verschließbar ist.

4. Messvorrichtung (100) nach Anspruch 3, die ferner einen Tank aufweist, der ausgebildet ist, in den zweiten Abschnitt zu passen und das Medium (103) aufweist.

5. Messvorrichtung (100) nach einem der vorhergehenden Ansprüche, wobei das Medium (103) Wasser ist.

6. Die Messvorrichtung (100) nach einem der vorangehenden Ansprüche, wobei das Verarbeitungsmodul ferner so konfiguriert ist, dass es ein Signal bereitstellt, das anzeigt, dass sich der Abstand zwischen dem ersten Ende des Behälters (109) und dem am zweiten Ende des Behälters (109) angeordneten Material zwischen der Messung bei t1 und t2 über einen Schwellenwert hinaus geändert hat.

7. Die Messvorrichtung (100) nach einem der vorhergehenden Ansprüche, ferner aufweisend einen Schalter, der betriebsmäßig mit dem Verarbeitungsmodul gekoppelt ist und vom Benutzer betätigt werden kann, wobei die Stellung des Schalters dem Verarbeitungsmodul anzeigt, ob das Signal ausgelöst wird, wenn sich der Abstand verringert oder vergrößert hat.

8. Die Messvorrichtung (100) nach einem der vorhergehenden Ansprüche, ferner aufweisend ein Kommunikationsmodul, das so konfiguriert ist, dass es über Kabel oder drahtlos mit einem Netzwerk kommuniziert.

9. Die Messvorrichtung (100) nach Anspruch 8, wobei das Verarbeitungsmodul so konfiguriert ist, dass es die Messdaten über das Kommunikationsmodul und über das Netzwerk an eine Remotestation sendet.

10. Vorrichtung zum Kühlen, die die Messvorrichtung (100) gemäß einem der vorhergehenden Ansprüche aufweist.

11. Verfahren, aufweisend
a. Bereitstellen der Messvorrichtung nach einem der Ansprüche 1 bis 9; Bestimmen des Abstands zwischen der Oberfläche des Näherungssensors (101) und der Oberfläche des Mediums (103) zu mindestens zwei verschiedenen Zeitpunkten t1 und t2.
b. Ermitteln, dass sich der zu mindestens t1 und t2 ermittelte Abstand über einen Schwellenwert hinaus verändert hat und damit Ermitteln, dass der Übergang zwischen der flüssigen und der festen Phase des Mediums (103) stattgefunden hat.

## Revendications

1. Dispositif de mesure (100) pour déterminer la transition entre une phase liquide et une phase solide d'un milieu (103) comprenant :
a) un récipient (109) comprenant des parois enfermant un espace et les parois étant imperméables au milieu (103) ;
b) un premier capteur de proximité (101) disposé à l'intérieur du récipient (109),
dans lequel
le conteneur (109) comprend une première extrémité et une seconde extrémité opposée,
les dispositifs de mesure (100) comprennent le milieu (103) à l'intérieur de l'espace et le milieu (103) est disposé à la seconde extrémité, et
le premier capteur de proximité (101) est disposé à la première extrémité et configuré pour déterminer la distance entre la surface du capteur de proximité (101) et la surface du support (103) ; et
c) un module de traitement couplé de manière opérationnelle au capteur de proximité (101) et configuré pour déclencher des mesures par le capteur de proximité (101) à au moins deux points prédéterminés dans le temps t1 et t2,
dans lequel le module de traitement est en outre configuré pour déterminer que la distance entre la surface du capteur de proximité (101) et la surface du milieu (103) a changé au-delà d'un seuil entre les mesures à t1 et t2, et ainsi pour déterminer que la transition entre la phase liquide et la phase solide du milieu (103) s'est produite.

2. Le dispositif de mesure (100) selon la revendication 1, comprenant en outre un second capteur de proximité (101) disposé à la seconde extrémité du récipient (109).

3. Le dispositif de mesure (100) selon l'une quelconque des revendications précédentes, dans lequel le récipient (109) comprend une première partie comprenant le premier capteur de proximité (101) et une seconde partie pouvant être scellée à la première partie.

4. Le dispositif de mesure (100) de la revendication 3, comprenant en outre un réservoir qui est adapté pour s'ajuster dans la deuxième partie et comprenant le milieu (103).

5. Le dispositif de mesure (100) de toute revendication précédente, dans lequel le milieu (103) est de l'eau.

6. Le dispositif de mesure (100) de l'une quelconque des revendications précédentes, dans lequel le module de traitement est en outre configuré pour fournir un signal indiquant que la distance entre la première extrémité du récipient (109) et le matériau disposé à la seconde extrémité du récipient (109) a changé au-delà d'un seuil entre la mesure à t1 et t2.

7. Le dispositif de mesure (100) de l'une quelconque des revendications précédentes, comprenant en outre un commutateur couplé de manière opérationnelle au module de traitement et pouvant être actionné par l'utilisateur, dans lequel la position du commutateur indique au module de traitement si le signal est déclenché lorsque la distance a été réduite ou augmentée.

8. Le dispositif de mesure (100) de l'une quelconque des revendications précédentes, comprenant en outre un module de communication configuré pour communiquer par câble ou sans fil avec un réseau.

9. Le dispositif de mesure (100) de la revendication 8, dans lequel le module de traitement est configuré pour envoyer les données de mesure via le module de communication et via le réseau à un dispositif de relocalisation.

10. Dispositif frigorifique comprenant le dispositif de mesure (100) selon l'une quelconque des revendications précédentes.

11. Méthode comprenant
a) La mise à disposition du dispositif de mesure selon l'une quelconque des revendications 1 à 9 ; la détermination de la distance entre la surface du capteur de proximité (101) et la surface du milieu (103) à au moins deux instants différents t1 et t2.
b) déterminer que la distance déterminée au moins à t1 et t2 a changé au-delà d'un seuil et déterminer ainsi que la transition entre la phase liquide et la phase solide du milieu (103) s'est produite.
